# EUROPÄISCHE PATENTSCHRIFT

(11) **EP 1 512 550 B1**
(45) Veröffentlichungstag und Bekanntmachung des Hinweises auf die Patenterteilung: **12.03.2008**
(21) Anmeldenummer: 03020095.0
(22) Anmeldetag: 04.09.2003
(51) Int. Cl.: B43K 19/02, B43K 21/08, B43K 23/10, A45D 40/06, A45D 40/20

(54) **Vorrichtung zum Halten einer Mine in einem Stift**
Device for holding a lead in a pencil
Dispositif pour tenir une mine dans un crayon

(43) Veröffentlichungstag der Anmeldung: 09.03.2005
(73) Patentinhaber: Schwan-STABILO Cosmetics GmbH & Co. KG, 90562 Heroldsberg (DE)
(72) Erfinder:
(74) Vertreter: Leinweber & Zimmermann

(56) Entgegenhaltungen:
- CH-A- 162 483
- DE-C- 920 470
- FR-A- 1 351 560
- GB-A- 622 346

## Beschreibung

Die Erfindung betrifft eine Vorrichtung zum Halten einer Mine in einem Stift, mit einer in Radialrichtung der Mine wirkenden Klemmeinrichtung.

Haltevorrichtungen der oben genannten Art sind bekannt. Dabei wird herkömmlicherweise zur Verankerung der Mine, insbesondere bei weichen, wachshaltigen Minen, ein Napf mit Innenklemmstegen als Klemmeinrichtung verwendet. Die Innenklemmstege graben bzw. betten sich bei der Montage in die Mine ein, wodurch die Mine verankert ist.

Für feste poröse Minen, z.B. Kreide- oder Puderminen, bietet diese Art der Verankerung keine sichere Klemmung. Vielmehr führt sie dazu, daß die Minen schon bei der Montage zerstört werden.

DE-C-920470, CH-A-162483 und FR-A-1351560 beschreiben herkömmliche Stifte, GB-A-622346 eine Feder (3), die Ähnlichkeiten mit der Feder (24) der Erfindung hat.

Der Erfindung liegt mithin die Aufgabe zugrunde, die Vorrichtung der eingangs genannten Art derart weiterzubilden, daß insbesondere bruchempfindliche, poröse Minen schonend und sicher verankert werden können.

Erfindungsgemäß wird die gestellte Aufgabe dadurch gelöst, daß die Klemmeinrichtung gegen eine elastische Rückstellkraft in Radialrichtung aufweitbar ist.

Dadurch, daß die Klemmeinrichtung aufweitbar ist, besteht nicht die Gefahr, daß sie die Mine beim Einsetzen zerdrückt. Da darüber hinaus die Mine gegen eine elastische Rückstellkraft axial nach hinten verschieblich sein kann, besteht auch nicht die Gefahr, daß die Mine beim axialen Einschieben in die Klemmeinrichtung zu großen Axialkräften ausgesetzt ist, woraus Bruchgefahr resultieren würde.

Die Klemmeinrichtung kann einen Abschnitt einer Schraubenfeder aufweisen. Schraubenfedern finden - wenn auch nicht zum Zwecke des radialen Einklemmens - in der Stifttechnik weite Verbreitung, weshalb die Verwendung einer Schraubenfeder für den einschlägigen Fachmann besonders einfach ist.

Die Klemmeinrichtung kann auch alternativ oder zusätzlich mindestens eine Lasche aufweisen, die elastisch gegen die Mine vorgespannt ist. Auch hierbei handelt es sich um eine Maßnahme zur Vereinfachung des Gesamtaufwands.

Erfindungsgemäß kann eine Abstützeinrichtung zum Abstützen der Klemmeinrichtung und/oder der Mine in Axialrichtung vorgesehen sein.

Dabei kann auch die Abstützeinrichtung einen Abschnitt einer Schraubenfeder aufweisen.

Erfindungsgemäß besonders bevorzugt ist eine elastische Einrichtung zum Vorspannen der Mine in Richtung weg von ihrem Arbeitsende vorgesehen. Dadurch wird verhindert, daß die Mine einfach herausfällt.

Nach einer besonders bevorzugten Ausführungsform der Erfindung ist vorgesehen, daß die Klemmeinrichtung einstückig mit der Abstützeinrichtung und/oder mit der Vorspanneinrichtung ausgeführt ist. Insbesondere im Falle der Und-Verknüpfung wird durch die Verwendung einer einzigen Einrichtung für drei verschiedene Zwecke, nämlich zum Klemmen, zum Abstützen und zum Vorspannen die Teilezahl erheblich reduziert.

Darüber hinaus kann erfindungsgemäß ein Widerlager vorgesehen sein, an dem sich die Abstützeinrichtung ihrerseits abstützt. Sofern das Widerlager mit der Abstützeinrichtung verrastet ist, kann eventuell auf die Vorspanneinrichtung verzichtet werden.

Das Widerlager kann ebenfalls einstückig mit der Abstützeinrichtung ausgeführt sein. Ist in diesem Falle die Abstützeinrichtung auch noch einstückig mit der Klemmeinrichtung und diese wiederum einstückig mit der Vorspanneinrichtung ausgeführt, so ergibt sich eine maximale Reduzierung der Teilezahl.

Das Widerlager ist nach einer bevorzugten Ausführungsform der Erfindung Teil einer Verstelleinrichtung, mittels derer die axiale Relativlage der Mine bezüglich einer Minenhülse einstellbar ist. Bei der Verstelleinrichtung kann es sich dabei beispielsweise um eine Drehmechanik handeln. Selbstverständlich ist die Erfindung aber auch auf andere Verstelleinrichtungen anwendbar, wie beispielsweise Schiebemechaniken.

Eine Ausgestaltung der Erfindung sieht vor, daß die elastische Rückstellkraft der Vorspannvorrichtung kleiner ist als diejenige der Abstützeinrichtung. Diese Ausgestaltung ist insbesondere im Hinblick auf eine eventuelle Verstelleinrichtung vorteilhaft. Es wird nämlich im Falle des Verstellens zunächst die beispielsweise als Feder ausgestaltete Vorspanneinrichtung zusammengedrückt, wohingegen die ebenfalls beispielsweise als Feder ausgestaltete Abstützeinrichtung wegen ihrer höheren elastischen Rückstellkraft nicht zusammengedrückt wird und daher eine eventuelle Axialverschiebung der Mine durch Kräfte auf deren Arbeitsende abfedern kann. Ein solches Abfedern kann nämlich nicht nur im Hinblick auf die Montage der Mine in die Haltevorrichtung wichtig sein, sondern auch beim regulären Gebrauch, weil dadurch dem Benutzer ein angenehmes und sauberes Applizieren ermöglicht wird.

Die Klemmeinrichtung, die Abstützeinrichtung, die Vorspanneinrichtung und/oder das Widerlager ist/sind erfindungsgemäß bevorzugt aus Metall, insbesondere aus Edelstahl. Darüber hinaus kommt aber auch Kunststoff als Material für die genannten Elemente in Betracht.

Die Erfindung schafft nicht nur die oben im einzelnen beschriebene Haltevorrichtung, sondern auch einen Stift mit einer solchen Haltevorrichtung.

Erfindungsgemäß bevorzugt ist bei dem Stift ein Kissen im Bereich des Arbeitsendes der Mine vorgesehen. Dieses Kissen dient zum Aufnehmen loser Minenpartikel, um Verschmutzungen zu vermeiden, und/oder als Transportschutz. Insbesondere in letzterem Fall ist das Kissen nachgiebig ausgestaltet.

Sofern das Kissen zum Aufnehmen loser Minenpartikel dienen soll, ist es erfindungsgemäß besonders bevorzugt, daß es Fasern, insbesondere Nylon- und/oder Polyesterfasern aufweist.

Aus Stabilitätsgründen kann nach der Erfindung ferner vorgesehen sein, daß das Kissen eine Fassung, insbesondere aus Polypropylen und/oder Polyethylen aufweist.

Im folgenden ist die Erfindung anhand bevorzugter Ausführungsbeispiele unter Bezugnahme auf die beiliegende Zeichnung mit weiteren Einzelheiten näher erläutert. Dabei zeigen
- Figur 1: eine schematische Längsschnittansicht eines Stiftes mit einer Haltevorrichtung nach einem ersten Ausführungsbeispiel der Erfindung,
- Figur 2: eine Ansicht der Haltevorrichtung nach Figur 1 mit darin gehaltener Mine,
- Figur 3: eine schematische Längsschnittansicht eines Stiftes mit einer Haltevorrichtung nach einem zweiten Ausführungsbeispiel der Erfindung,
- Figur 4: eine perspektivische Ansicht der Haltevorrichtung nach Figur 3 mit darin gehaltener Mine,
- Figur 5: eine perspektivische Ansicht eines Beispiels einer nicht beanspruchten Haltevorrichtung mit darin gehaltener Mine,
- Figur 6: eine Teillängsschnittansicht der Haltevorrichtung nach den Figuren 4 und 5 und
- Figur 7: eine schematische perspektivische Teilansicht eines weiteren Beispiels einer nicht beanspruchten Haltevorrichtung.

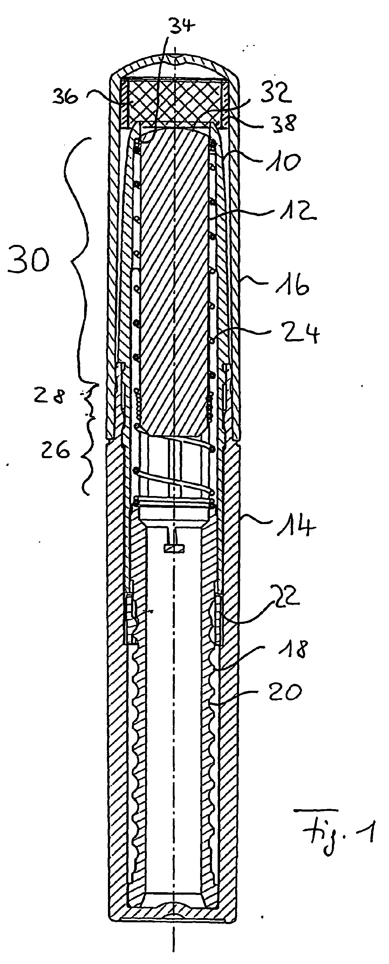

Figur 1 zeigt eine Längsschnittansicht eines Kosmetikstiftes. Die Erfindung ist aber nicht auf Kosmetikstifte beschränkt. Vielmehr ist sie auch auf andere Stifte anwendbar, wie beispielsweise Zeichenstifte, Malstifte, Schreibstifte etc.

Zu dem in Figur 1 gezeigten Stift gehört eine Patrone 10, in der eine Mine 12 gehalten ist. Die Patrone 10 ist drehbar bezüglich eines Schaftes 14 gehalten. Auf den Schaft 14 ist ein Schoner 16 aufgesteckt. In der Patrone 10 steckt ein Federhalter 18, der mittels einer Sechs-Kant-Kontur drehfest, jedoch axial verschieblich gehalten ist. Der Federhalter 18 weist ein Außengewinde 20 auf, das mit einem feststehend in dem Schaft 14 verankerten Gewindesegment 22 kämmt.

Der Federhalter 18 drückt an seiner Stirnseite gegen eine Schraubenfeder 24 aus Stahl. Die Schraubenfeder weist drei Bereiche auf, nämlich einen Abstützbereich 26, einen Klemmbereich 28 und einen Vorspannbereich 30. Ihr Innendurchmesser ist im Klemmbereich 28 geringfügig kleiner als der Außendurchmesser der Mine 12. Wegen ihrer Federeigenschaften ist sie aber dazu in der Lage, in Radialrichtung bezüglich der Mine 12 auszuweichen, wodurch nicht die Gefahr der Beeinträchtigung oder gar der Zerstörung der Mine 12 durch den Klemmbereich 28 besteht.

Die Feder 24 verringert das Spiel bzw. den Luftspalt zwischen der Mine 12 und der Patrone 10, wodurch eine verbesserte Minenführung und somit eine höhere Minenstabilität erzielt werden kann.

Wird auf ein Arbeitsende 32 der Mine 12 Druck in Axialrichtung der Mine 12 ausgeübt, so kann die Mine wegen der Elastizität des Abstützbereichs 26 axial ausweichen, weshalb auch ein solcher Druck nicht die Gefahr mit sich bringt, daß die Mine 12 Schaden nimmt.

Mithin kann die Mine 12 ohne die Gefahr ihrer Beeinträchtigung oder Zerstörung axial in Figur 1 von oben über den Vorspannbereich 30 in den Klemmbereich 28 eingeschoben und dort eingeklemmt werden. Alle diejenigen Kräfte, die auf die Mine wirken, sind nämlich lediglich elastische Rückstellkräfte, die im Klemmbereich radial und im Abstützbereich axial wirken, so daß jede Gefahr der Beeinträchtigung der Mine 12 beim Einführen in den Klemmbereich 28 ausgeschlossen ist.

Zum Einführen der Mine 12 in den Klemmbereich 28 besteht darüber hinaus noch die Möglichkeit, die Feder 24 entgegen ihrem Windungssinn zu tordieren, woraufhin sich der Klemmbereich weitet. In einen solchen geweiteten Klemmbereich kann auf besonders einfache Weise die Mine 12 eingeführt werden.

Wie bereits gesagt, stützt sich die Feder 24 einerseits über ihren Abstützbereich 26 an dem Federhalter 18 ab. Andererseits liegt eine Abstützung an einem Federanschlag 34 innerhalb der Patrone vor. In montiertem Zustand ist der Vorspannbereich 30 gegen den Federanschlag 34 vorgespannt.

Wird in diesem Zustand die Patrone 10 gegen den Schaft 14 verdreht, so bewirkt die Gewindepaarung 22/20 eine Axialverschiebung des Federhalters 18 bezüglich der Patrone 10. Da der Abstützbereich 26 eine höhere Federsteifigkeit hat als der Vorspannbereich 30, wird der Vorspannbereich 30 mit weiterer Verdrehung der Patrone 10 bezüglich des Schaftes 14 allmählich zusammengedrückt, was mit einer Axialbewegung des Klemmbereichs 28 und damit der Mine 12 einhergeht.

Da demgegenüber der Abstützbereich 26 wegen seiner höheren Federsteifigkeit nicht zusammengedrückt wird, bleibt die axiale Abfederung der Mine 12 auch dann erhalten, wenn sie maximal aus der Patrone 10 herausgedreht ist.

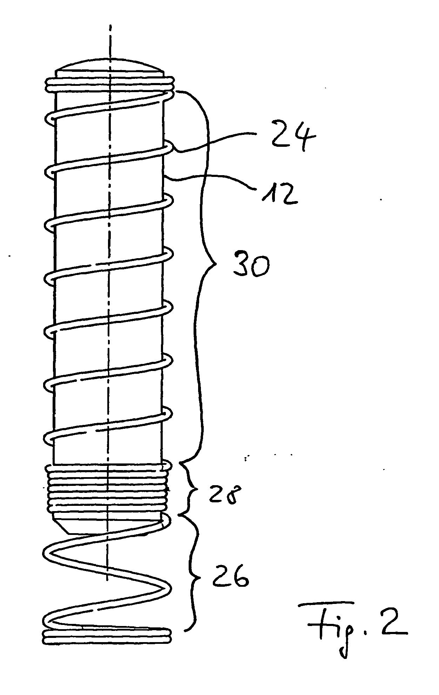

Die unterschiedlichen Federsteifigkeiten der beiden Bereiche 26 und 30 ergeben sich insbesondere aus unterschiedlichen Windungsabständen, wie dies deutlich der Figur 2 zu entnehmen ist. Insbesondere dann, wenn die Feder 24 aus Kunststoff ist, können unterschiedliche Federsteifigkeiten auch durch unterschiedliche Federdrahtquerschnitte erzielt werden.

In den Schoner 16 ist ein Kissen eingesetzt, das sich aus Fasern 36 und einer Fassung 38 zusammensetzt. Bei den Fasern handelt es sich um Nylonfasern. Die Fassung ist aus Polypropylen. Da sich die Fasern 36 dann, wenn der Schoner 16 aufgesetzt ist, in unmittelbarer Nähe bzw. in Anlage an dem Arbeitsende 32 befinden, nehmen sie lose Minenpartikel auf, die ansonsten die Patrone 10 an dem Außenmantel verschmutzen könnten, was für die Handhabung des Stiftes unerwünscht ist. Die Fassung 38 dient dazu, die Fasern 36 zusammenzuhalten.

Das aus den Fasern 36 und der Fassung 38 gebildete Kissen dient gleichzeitig als Transportschutz.

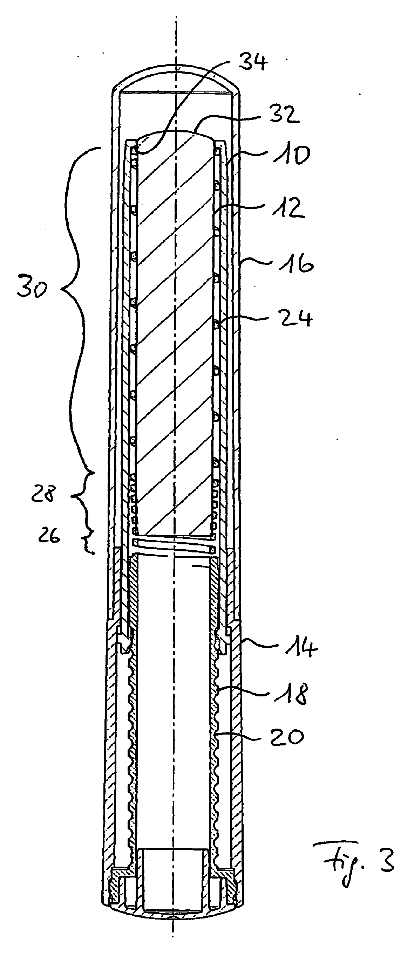

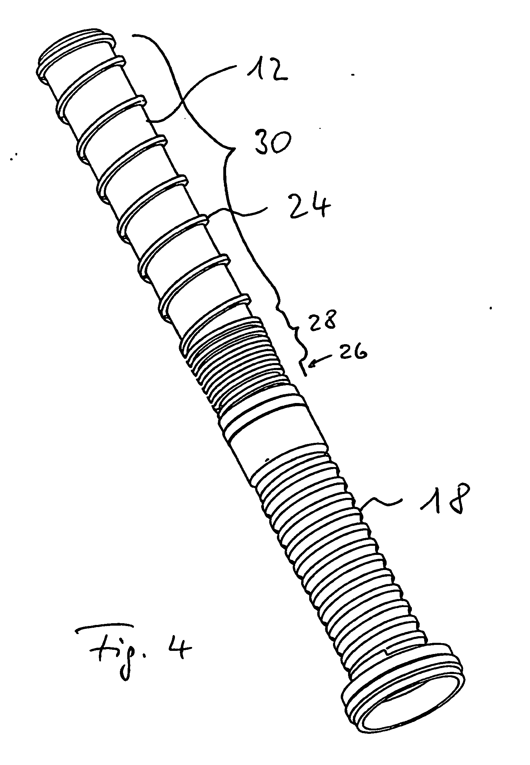

Das Ausführungsbeispiel nach den Figuren 3 und 4 entspricht im wesentlichen demjenigen nach den Figuren 1 und 2, weshalb weitestgehend auf die diesbezüglichen Erläuterungen verwiesen werden kann.

Es unterscheidet sich allerdings insofern, als bei dem Ausführungsbeispiel nach den Figuren 3 und 4 die Feder 24 aus Kunststoff und einstückig mit dem Federhalter 28 ausgeführt ist. Darüber hinaus ist der Federhalter 18 gegenüber dem Schaft 14 unbeweglich. Wird daher bei dem Ausführungsbeispiel nach den Figuren 3 und 4 die Patrone 10 bezüglich des Schaftes 14 verdreht, so bewegt sich nicht etwa der Federhalter 18 axial, sondern vielmehr die Patrone 10. Sie wird nämlich in den Schaft 14 quasi eingeschraubt, was im Ergebnis zu einem weiteren Freilegen der Mine 12 führt.

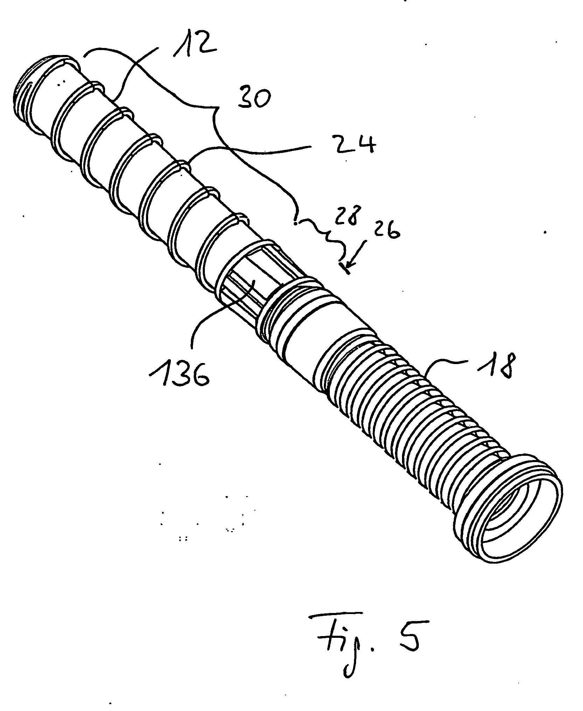

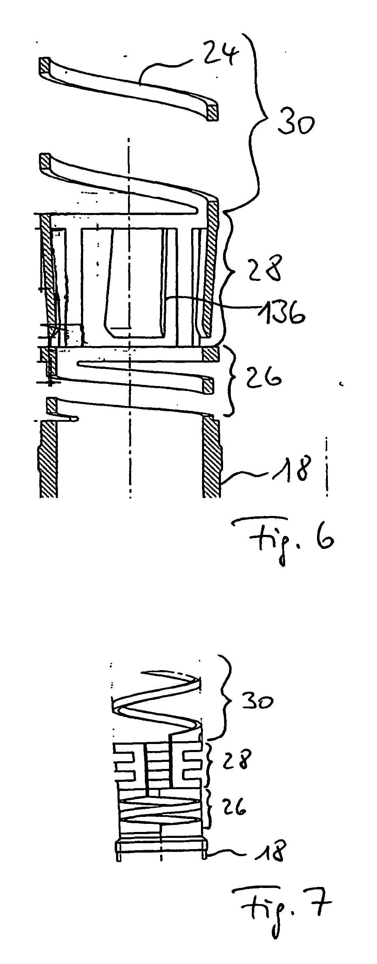

Das nicht beanspruchte Beispiel der Haltevorrichtung nach den Figuren 5 und 6 entspricht weitestgehend demjenigen nach Figur 4, unterscheidet sich jedoch insofern, als der Klemmbereich 28 nicht durch einen Schraubenfederabschnitt realisiert ist, sondern durch Laschen, von denen eine mit der Bezugszahl 136 bezeichnet ist und die gegen elastische Vorspannkraft nach radial außen gedrückt werden können.

Figur 7 zeigt die gleiche Teilansicht wie Figur 6, jedoch von einem anderen nicht beanspruchten Beispiel. Dort ist nämlich der Klemmbereich 28 von Rippen gebildet, die eine darin eingesteckte Mine abgesehen von einem Spalt umlaufen. Der Spalt kann gegen elastische Rückstellkraft einer Rippe aufgeweitet werden.

## Patentansprüche

1. Stift mit einer Mine (12) und einer Vorrichtung zum Halten der Mine (12), wobei die Haltevorrichtung eine in Radialrichtung der Mine (12) wirkende Klemmeinrichtung (28) auf weist,
**dadurch gekennzeichnet, daß**
die Klemmeinrichtung (28) einen Abschnitt einer Schraubenfeder (24) aufweist, der gegen seine elastische Rückstellkraft in Radialrichtung aufweitbar ist.

2. Stift nach Anspruch 1, **dadurch gekennzeichnet, daß** die Mine (12) gegen eine elastische Rückstellkraft der Haltevorrichtung axial nach hinten verschieblich ist.

3. Stift nach Anspruch 1 oder 2, **dadurch gekennzeichnet, daß** die Klemmeinrichtung (28) mindestens eine Lasche (36) aufweist, die elastisch gegen die Mine (12) vorgespannt ist.

4. Stift nach einem der vorangehenden Ansprüche, **gekennzeichnet durch** eine Abstützeinrichtung (26) zum Abstützen der Klemmeinrichtung (28) und/oder der Mine (12) in Axialrichtung.

5. Stift nach Anspruch 4, **dadurch gekennzeichnet, daß** die Abstützeinrichtung (26) einen Abschnitt einer Schraubenfeder (24) aufweist.

6. Stift nach einem der vorangehenden Ansprüche, **gekennzeichnet durch** eine elastische Einrichtung (30) zum Vorspannen der Mine (12) in Richtung axial nach hinten.

7. Stift nach einem der Ansprüche 4 bis 6, **dadurch gekennzeichnet, daß** die Klemmeinrichtung (28) einstückig mit der Abstützeinrichtung (26) und/oder mit der Vorspanneinrichtung (30) ausgeführt ist.

8. Stift nach einem der Ansprüche 4 bis 7, **gekennzeichnet durch** ein Widerlager (18), an dem sich die Abstützeinrichtung (26) abstützt.

9. Stift nach Anspruch 8, **dadurch gekennzeichnet, daß** das Widerlager (18) einstückig mit der Abstützeinrichtung (26) ausgeführt ist.

10. Stift nach Anspruch 8 oder 9, **dadurch gekennzeichnet, daß** das Widerlager (18) Teil einer Verstelleinrichtung ist, mittels derer die axiale Relativlage der Mine (12) bezüglich einer Minenhülse (10) einstellbar ist.

11. Stift nach einem der Ansprüche 4 bis 10, **dadurch gekennzeichnet, daß** die elastische Rückstellkraft der Vorspanneinrichtung (30) kleiner ist als diejenige der Abstützeinrichtung (26).

12. Stift nach einem der vorangehenden Ansprüche, **dadurch gekennzeichnet, daß** die Klemmeinrichtung (28), die Abstützeinrichtung (26), die Vorspanneinrichtung (30) und/oder das Widerlager (18) aus Metall, insbesondere aus Edelstahl ist/sind.

13. Stift nach einem der vorangehenden Ansprüche, **dadurch gekennzeichnet, daß** die Klemmeinrichtung (28), die Abstützeinrichtung (26), die Vorspanneinrichtung (30) und/oder das Widerlager (18) aus Kunststoff ist/sind.

14. Stift nach einem der vorangehenden Ansprüche, **gekennzeichnet durch** ein Kissen (36, 38) im Bereich des Arbeitsendes (32) der Mine (12).

15. Stift nach Anspruch 14, **dadurch gekennzeichnet, daß** das Kissen (36, 38) Fasern (36), insbesondere Nylon- und/oder Polyesterfasern aufweist.

16. Stift nach Anspruch 14 oder 15, **dadurch gekennzeichnet, daß** das Kissen (36, 38) eine Fassung (38), insbesondere aus Polypropylen und/oder Polyethylen aufweist.

## Claims

1. Pencil having a cartridge (12) and a device for holding the cartridge (12), with the holding device having a clamping device (28) that acts in the radial direction of the cartridge (12),
**characterised in that**
the clamping device (28) presents a section of a helical spring (24) that can be widened against its elastic restoring force in the radial direction.

2. Pencil according to claim 1, **characterised in that** the cartridge (12) can be displaced against an elastic restoring force of the holding device axially towards the rear.

3. Pencil according to claim 1 or 2, **characterised in that** the clamping device (28) has at least one clip (136) that is elastically pretensioned against the cartridge (12).

4. Pencil according to one of the preceding claims, **characterised by** a supporting device (26) for supporting the clamping device (28) and/or the cartridge (12) in the axial direction.

5. Pencil according to claim 4, **characterised in that** the supporting device (26) presents a section of a helical spring (24).

6. Pencil according to one of the preceding claims, **characterised by** an elastic device (30) for pretensioning the cartridge (12) axially towards the rear.

7. Pencil according to one of claims 4 to 6, **characterised in that** the clamping device (28) is constructed in one piece with the supporting device (26) and/or with the pretensioning device (30).

8. Pencil according to one of claims 4 to 7, **characterised by** an abutment (18) on which the supporting device (26) is supported.

9. Pencil according to claim 8, **characterised in that** the abutment (18) is constructed in one piece with the supporting device (26).

10. Pencil according to claim 8 or 9, **characterised in that** the abutment (18) is part of an adjusting device by means of which the axial relative position of the cartridge (12) can be adjusted in relation to a cartridge sleeve (10).

11. Pencil according to one of claims 4 to 10, **characterised in that** the elastic restoring force of the pretensioning device (30) is smaller than that of the supporting device (26).

12. Pencil according to one of the preceding claims, **characterised in that** the clamping device (28), the supporting device (26), the pretensioning device (30) and/or the abutment (18) are/is made from metal, in particular from high-grade steel.

13. Pencil according to one of the preceding claims, **characterised in that** the clamping device (28), the supporting device (26), the pretensioning device (30) and/or the abutment (18) are/is made from plastics material.

14. Pencil according to one of the preceding claims, **characterised by** a cushion (36, 38) in the region of the working end (32) of the cartridge (12).

15. Pencil according to claim 14, **characterised in that** the cushion (36, 38) has fibres (36), in particular nylon and/or polyester fibres.

16. Pencil according to claim 14 or 15, **characterised in that** the cushion (36, 38) has a holder (38), in particular made from polypropylene and/or polyethylene.

## Revendications

1. Porte-mine avec une mine (12) et un dispositif pour maintenir la mine (12), le dispositif de maintien présentant un moyen de serrage (28) agissant dans le sens radial de la mine (12),
**caractérisé en ce que** le moyen de serrage (28) présente un tronçon d'un ressort hélicoïdal (24) qui peut être élargi dans sa direction radiale à l'encontre de sa force de rappel élastique.

2. Porte-mine selon la revendication 1, **caractérisé en ce que** la mine (12) peut coulisser axialement vers l'arrière à l'encontre d'une force de rappel élastique du dispositif de maintien.

3. Porte-mine selon la revendication 1 ou 2, **caractérisé en ce que** le moyen de serrage (28) présente au moins une patte (36) qui est précontrainte élastiquement contre la mine (12).

4. Porte-mine selon l'une des revendications précédentes, **caractérisé par** un moyen de soutien (26) pour soutenir le moyen de serrage (28) et/ou la mine (12) en direction axiale.

5. Porte-mine selon la revendication 4, **caractérisé en ce que** le moyen de soutien (26) présente un tronçon d'un ressort hélicoïdal (24).

6. Porte-mine selon l'une des revendications précédentes, **caractérisé par** un moyen élastique (30) pour précontraindre la mine (12) axialement vers l'arrière.

7. Porte-mine selon l'une des revendications 4 à 6, **caractérisé en ce que** le moyen de serrage (28) est réalisé d'un seul tenant avec le moyen de soutien (26) et/ou avec le moyen de précontrainte (30).

8. Porte-mine selon l'une des revendications 4 à 7, **caractérisé par** un contre-appui (18) contre lequel s'appuie le moyen de soutien (26).

9. Porte-mine selon la revendication 8, **caractérisé en ce que** le contre-appui (18) est réalisé d'un seul tenant avec le moyen de soutien (26).

10. Porte-mine selon la revendication 8 ou 9, **caractérisé en ce que** le contre-appui (18) fait partie d'un moyen de réglage qui permet de régler la position axiale relative de la mine (12) par rapport à un fourreau de mine (10).

11. Porte-mine selon l'une des revendications 4 à 10, **caractérisé en ce que** la force de rappel élastique du moyen de précontrainte (30) est inférieure à celle du moyen de soutien (26).

12. Porte-mine selon l'une des revendications précédentes, **caractérisé en ce que** le moyen de serrage (28), le moyen de soutien (26), le moyen de précontrainte (30) et/ou le contre-appui (18) est/sont réalisé(s) en métal, notamment en acier inoxydable.

13. Porte-mine selon l'une des revendications précédentes, **caractérisé en ce que** le moyen de serrage (28), le moyen de soutien (26), le moyen de précontrainte (30) et/ou le contre-appui (18) est/sont réalisé(s) en matière plastique.

14. Porte-mine selon l'une des revendications précédentes, **caractérisé par** un coussin (36, 38) dans la région de l'extrémité de travail (32) de la mine (12).

15. Porte-mine selon la revendication 14, **caractérisé en ce que** le coussin (36, 38) présente des fibres (36), notamment des fibres de nylon et/ou de polyester.

16. Porte-mine selon la revendication 14 ou 15, **caractérisé en ce que** le coussin (36, 38) présente un entourage (38), notamment en polypropylène et/ou en polyéthylène.
